Europäisches Patentamt

European Patent Office

Office européen des brevets

(19)

(11) Publication number : **0 388 726 B1**

# (12) EUROPEAN PATENT SPECIFICATION

(45) Date of publication of patent specification :
02.12.92 Bulletin 92/49

(21) Application number : **90104480.0**

(22) Date of filing : **09.03.90**

(51) Int. Cl.⁵ : **F25D 11/02, F25D 29/00**

(54) **Refrigerating appliance with single thermostatic temperature control device.**

(30) Priority : **21.03.89 IT 4571689**

(43) Date of publication of application :
**26.09.90 Bulletin 90/39**

(45) Publication of the grant of the patent :
**02.12.92 Bulletin 92/49**

(84) Designated Contracting States :
**DE DK ES FR GB IT NL SE**

(56) References cited :
**EP-A- 0 064 873**
**EP-A- 0 345 165**
**FR-A- 2 254 762**
**US-A- 2 724 577**

(73) Proprietor : **INDUSTRIE ZANUSSI S.p.A.**
**Via Giardini Cattaneo 3**
**I-33170 Pordenone (IT)**

(72) Inventor : **Marega, Paolo**
**Via Aquileia 13**
**I-33084 Cordenons, Pordenone (IT)**
Inventor : **Giambattista, Riccardo**
**Via Dolomiti 11**
**I-36061 Bassano del Grappa, Vicenza (IT)**

(74) Representative : **Giugni, Valter et al**
**PROPRIA Protezione Proprietà Industriale**
**S.p.A. Via Mazzini 13**
**I-33170 Pordenone (IT)**

EP 0 388 726 B1

Jouve, 18, rue Saint-Denis, 75001 PARIS

# Description

The present invention relates to a refrigerating appliance comprising a refrigerating circuit provided with a thermostatic temperature control arrangement.

Particularly, but not exclusively, the present invention relates to a multi-temperature refrigerating appliance provided with a single thermostatic temperature control device.

Two-temperature refrigerating appliances are well known, having two main compartments which are kept at different temperatures and provided with independent access doors. Usually, one of the compartments is maintained at an average temperature of about + 5°C for preserving fresh goods, whereas the other compartment is maintained at an average temperature of about - 18°C for freezing purposes.

Preferably, such refrigerating appliances utilize one single-compressor refrigerating circuit in which two evaporators associated with relevant storage and freezer compartments are connected in series. An embodiment of this kind is for instance disclosed in EP-A-Ø 298 349.

The temperature in the refrigerating appliance, determined by alternate operative and inoperative phases of the compressor, is usually controlled by means of a single thermostatic control device which is capable of sensing, directly or indirectly, the temperature of the evaporator associated with the storage compartment.

More particularly, the compressor is actuated when the temperature of the storage compartment evaporator exceeds a given maximum value and is deenergized, in order to perform a corresponding defrost phase of the storage compartment evaporator, when the above temperature falls below a predetermined minimum value. The temperature inside the compartments depends on the ON/OFF ratio in the operating cycle of the compressor, as well as on the general dimensions of the refrigerating appliance, its loading conditions and the ambient temperature.

It is known, in this condition, that when the ambient temperature is particularly low the thermostatic control device makes the compressor run with correspondingly reduced operative phases with respect to the inoperative phases, in order to maintain the predetermined average temperature of approx. + 5°C in the storage compartment. Under these operating conditions, therefore, the freezer compartment is likely to be cooled insufficiently by the associated evaporator, with a consequent deterioration of the goods contained in the freezer compartment itself. Anyway, the long inoperative phases of the compressor in case of particularly low ambient temperature cause undesirably wide temperature fluctuations to occur in both compartments, and this is in contrast with a desirable correct operation. In order to overcome the above drawbacks it is known, for instance from FR-A-2 254 762, to provide a refrigerating appliance comprising a control device, driven by one single thermostatic element sensing the temperature in one compartment of the refrigerating appliance, said control device keeping said compartment at a predetermined average temperature by means of alternate operative and inoperative phases of a refrigerating circuit, said refrigerating appliance further comprising heating means for thermally balancing said compartment, said heating means being operative during each inoperative phase of the refrigerating circuit. The amount of heat generated by the balancing resistance during the defrost phases of the storage compartment evaporator artificially compensates for the low ambient temperature, in this way promoting a better ratio between the ON and OFF phases of the compressor, thus enabling the freezer compartment to be refrigerated correctly and causing narrower temperature fluctuations to occur in both compartments.

On the other hand, this arrangement involves a useless energy consumption when the ambient temperature is relatively high.

Hence, refrigerating appliances of the kind described above have been provided having a manually operable switch by which the balancing resistance can be disconnected, at least partially, when the ambient temperature is relatively high. Such an arrangement, disclosed for instance in IT-A-1 027 733, is however unsatisfactory in that it calls for a personal intervention by the user, who also cannot monitor the ambient temperature changes in a steady and precise way, as it would be necessary.

From FR-A-2 347 634 it is also known to control operation of the balancing resistance by means of an additional thermostatic probe placed outside the refrigerating appliance and capable of detecting the ambient temperature. According to this arrangement, which is also of complicated construction, the probe senses a localized temperature, that is an inaccurate measure since the probe may easily be affected by possible thermal changes (caused by an adjacent cooking oven, for example) occurring in the neighbourhood.

In order to overcome such a drawback, two-temperature refrigerating appliances have also been provided wherein the additional probe controlling operation of the balancing resistance is located in the freezer compartment, so as to cause the storage compartment to be heated when the freezer compartment demands to be cooled further, for instance when the ambient temperature is particularly low.

This solution ensures a more precise operation of the refrigerating appliance, but is undesirably complicated from the constructional point of view; in fact, it requires an additional thermostatic probe which has to be connected with a temperature control device normally housed in the storage compartment and associated also with the probe which is provided in the storage compartment itself. It is thus necessary to provide in the refrigerating appliance a passage, communicating both compartments with each other, in which the interconnections for the additional probe are to be arranged and which must be sealingly closed. In view of a manufacture on an industrial scale, this undesirably complicates the assembly of the appliance.

It is the main object of the present invention to provide a refrigerating appliance of particularly simple construction and capable of implementing excellent performances, with no substantial energy loss, regardless of changes in the ambient temperature. More particularly, it is another object of the present invention to provide a refrigerating appliance of the kind mentioned above in which one single thermostatic temperature control device is required to be assembled in a conventional way.

The above objects are attained in a refrigerating appliance according to the appended claim, whose introductory portion is based on the afore-mentioned FR-A-2 254 762. The features of the present invention are defined by the characterizing clause of the appended claim.

The advantages of the present invention will become apparent from the following description, given only by way of example, with reference to the accompanying drawings, wherein:

- Fig. 1 diagrammatically shows a preferred embodiment of the refrigerating appliance according to the invention;

- Fig. 2 shows a preferred circuit arrangement for controlling the refrigerating appliance of Fig. 1.

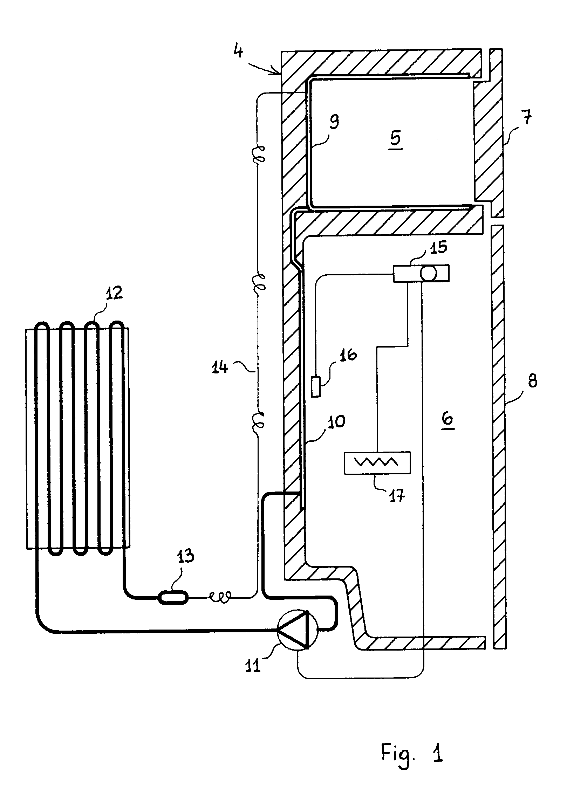

With reference to Fig. 1, the refrigerating appliance according to the invention includes a thermally insulated cabinet 4 having preferably two separate compartments 5 and 6, for freezing and storing purposes, respectively. The compartments 5 and 6 are provided with relevant separate access doors 7, 8 and associated with relevant evaporators 9, 10. The evaporators are series-connected in a refrigerating circuit also comprising a compressor 11, a condenser 12, a dehydrating filter 13 and a throttling element 14.

The refrigerating appliance is also provided with a control device 15, preferably located inside the storage compartment 6 and driven by one single thermostatic temperature control element including for instance a probe 16. This latter is preferably adjacent to the evaporator 1Ø of the storage compartment 6 in order to indirectly detect the temperature thereof; the control device 15 is arranged to control operation of the compressor 11 with alternate operative and inoperative phases of the compressor itself in order to perform, respectively, corresponding phases of refrigeration of compartments 5, 6 and defrost phases of the evaporator 1Ø associated with the storage compartment 6.

More particularly, the control device 15 is arranged to actuate the compressor 11 when the probe 16 senses a temperature exceeding a first predetermined value A, and to deenergize the compressor 11 when the probe 16 detects a temperature which is lower than a second predetermined value B, wherein A is higher than B.

Depending on the ratio between the ON/OFF phases of the compressor 11, as well as on the general dimensions of the refrigerating appliance, its loading conditions and the ambient temperature, the compartments 5 and 6 are normally maintained at an average temperature of approx. - 18°C and + 5°C, respectively.

The refrigerating appliance is further provided with heating means 17, for example including an electric resistance, for performing the thermal balancing of the storage compartment 6; such heating means are controlled by the control device 15 as described hereinafter.

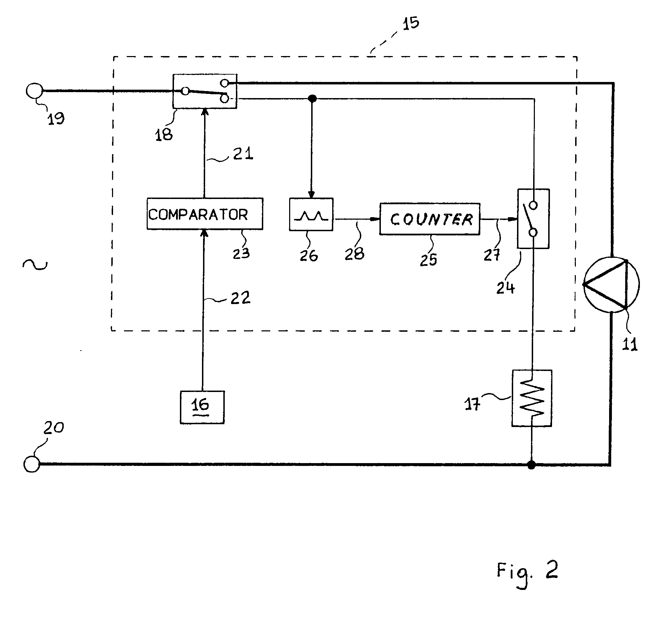

The control device 15 is preferably arranged as shown in Fig. 2, wherein a controlled switch 18, for instance an electronic controlled switch, is capable of alternately supplying the compressor 11 or the heating means 17 with the voltage across terminals 19, 2Ø of a power source.

In particular, the controlled switch 18 is arranged to switch between a first and a second position, to either supply the compressor 11 or the resistance 17, when a logic signal "Ø", respectively "1", occurs at its control input 21.

The probe 16 is preferably of the thermistor type (a PCT, for example) and in a known way feeds a signal corresponding to the detected temperature to a control input 22 of a threshold stage 23; this latter comprises for instance a hysteresis comparator whose output is connected to the input 21 of the controlled switch 18. In a way known per se, the comparator stage 23 is capable of generating at its output a logic signal "Ø" or a logic signal "1" when its input 22 is driven by a signal from the probe 16 which is representative of a temperature exceeding the said first value A or lower than the said second value B, respectively.

According to an aspect of the present invention, the balancing resistance 17 is connected to the controlled switch 18 through a controlled switch 24 which is normally open and driven by the output 27 of a pulse counter 25.

The "counting" control input 28 of the counter 25 is in turn driven by a pulse generator 26 which is supplied through the switch 18 when this latter is in said second position, shown in Fig. 2. For example, the generator 26 is arranged to produce a pulse upon occurrence of every half-wave of the supply voltage across terminals 19, 2Ø and forms a timer device together with the counter 25 and the controlled switch 24. In particular, the counter 25 is arranged to generate at its output 27 a control signal, for switching the controlled switch 24 to its closed position, only after having counted a predetermined number N of pulses from the generator 26, that is to say, with a given delay T with respect to the beginning of an inoperative phase of the compressor 11 determined by commutation of the switch 18 from its first to its second working position.

According to another aspect of the invention, provided that under normal operating conditions of the refrigerating appliance the inoperative phases of the compressor 11 have a given average duration t (e.g. 3∅ min.), the counter 25 is designed to count said number N after a delay T which is at least equal to said duration t; preferably, the delay T amounts to approx. 45 min.

The operation of the refrigerating appliance according to the invention is apparent. When the probe 16 senses a temperature exceeding said value A, the threshold stage 23 produces at its output a logic signal "∅", so that the switch 18 supplies the compressor 11 to perform a phase of refrigeration of the compartments 5 and 6. This refrigeration phase lasts until the probe 16 senses a temperature lower than said value B, so that the output of the threshold stage 23 switches to a logic level "1" and the controlled switch 18 consequently switches to the position shown in Fig. 2, thereby deenergizing the compressor 11 and actuating the timer device 24, 25, 26. It is started in this way an automatic defrost phase of the evaporator 1∅ associated with the storage compartment 6, whose temperature, therefore, raises gradually.

This defrost phase is terminated when the probe 16 senses again a temperature exceeding said value A, so that the threshold stage 23 drives the switch 18 to commutate to its position in which the compressor 11 is supplied again as described before and the stages 24, 25, 26 of the timer device are reset by the power supply being cut off.

If the above inoperative phase of the compressor 11 has a correct duration t not longer than the delay T, the balancing resistance 17 is not actuated, avoiding in this way a useless energy consumption.

If, however, for instance under conditions of particularly low ambient temperature, the inoperative phase of the compressor 11 has a duration longer than the delay T, the counter 25 generates at its output 27, after having counted the said number N of pulses, the control signal which determines commutation of the switch 24 to its closed position. The balancing resistance 17 is thereby supplied via switches 18 and 24, so as to warm up the storage compartment 6 and speed up the temperature raise therein.

When the probe 16 once again senses a temperature exceeding value A the general operation of the refrigerating appliance goes on as described before, with a ratio between the ON/OFF phases of the compressor 11 which is kept at an optimum figure thanks to the possible automatic operation of the balancing resistance 17.

It is also to be pointed out that the probe 16, the control device 15 and the resistance 17 are all housed in the storage compartment 6, so that they can readily be assembled without the need of structural modifications in the insulated cabinet 4, which would be required for instance for providing communication passages between the compartments 5 and 6. It is apparent that the refrigerating appliance according to the present invention is of simple construction and operation.

Obviously, the described refrigerating appliance may undergo a number of modifications.

For example, it is apparent to a man skilled in the art that the control means and timer means may be of different kind and differently dimensioned, as the case may be.

Furthermore, the refrigerating appliance may be of different kind, that is, it may only comprise one or more storage compartments 6.

## Claims

1. Refrigerating appliance comprising a control device (15) driven by one single thermostatic element (16) sensing the temperature in a compartment (6) of the refrigerating appliance, said control device (15) keeping said compartment at a predetermined average temperature by means of alternate operative and inoperative phases of a refrigerating circuit (9-14), the refrigerating appliance further comprising heating means (17) for thermally balancing said compartment (6), characterized in that said control device (15) Includes timer means (24, 25, 26) for actuating said heating means (17) with a predetermined delay (T) with respect to the beginning of each inoperative phase of the refrigerating circuit (9 - 14) which duration (t) exceeds said delay (T).

## Patentansprüche

1. Kühlapparat, der mit durch ein einziges, die Temperatur in einem Aufbewahrungsraum (6) des Kühlapparates erfassendes thermostatisches Organ (16) angesteuerten Regelmitteln (15) versehen ist, wobei solche Regelmittel (15) den genannten Aufbewahrungsraum (6) durch Abwechselung von Ein- und Ausschaltperioden eines Kälteaggregats (9-14) bei bestimmten Durchschnittstemperaturverhältnissen halten, und der weiter Heizmittel (17) zum thermischen Ausgleich des genannten Aufbewahrungsraum (6) umfaßt, **dadurch gekennzeichnet,** daß solche Regelmittel (15) Zeitschaltmittel (24, 25, 26) umfassen und zum Einschalten solcher Heizmittel (17) nach einer vorbestimmten Verzögerungszeit (T) von dem Beginn jeder einzelnen Ausschaltperiode des Kälteaggregates (9-14) geeignet sind, deren Dauer (t) sich länger als die genannte Verzögerungszeit (T) erweist.

**Revendications**

1. Appareil de réfrigération comprenant des moyens de contrôle (15) commandés par un seul élément thermostatique (16) qui détecte la température dans une enceinte de conservation (6) de l'appareil de réfrigération, lesdits moyens de contrôle (15) étant propres à maintenir ladite enceinte à une température moyenne pré-établie au moyen d'une succession de phases marche-arrêt alternées d'un groupe frigorifique (9-14), l'appareil de réfrigération comprenant en outre des moyens de chauffe (17) pour l'équilibrage thermique de ladite enceinte (6), caractérisé en ce que lesdits moyens de contrôle (15) comprennent des moyens de temporisation (24, 25, 26) et sont aptes à mettre en fonction lesdits moyens de chauffe (17) avec un temps de retard (T) préétabli par rapport au début de chaque phase d'arrêt du groupe frigorifique (9-14) dont la durée (t) soit supérieure au dit temps de retard (T).

Fig. 1

Fig. 2